(19) Europäisches Patentamt / European Patent Office / Office européen des brevets

(11) **EP 3 301 945 A1**

(12) **EUROPEAN PATENT APPLICATION**

(43) Date of publication:
04.04.2018 Bulletin 2018/14

(51) Int Cl.:
$H04N\ 21/63$ (2011.01)   $H04B\ 17/00$ (2015.01)
$H04H\ 60/80$ (2008.01)   $H04L\ 29/06$ (2006.01)
$H04N\ 21/647$ (2011.01)  $G06N\ 7/00$ (2006.01)

(21) Application number: 16191152.4

(22) Date of filing: 28.09.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicants:
• **Kryftis, Yiannos**
  1700 Nicosia (CY)
• **Mavromoustakis, Constandinos**
  1700 Nicosia (CY)
• **Mastorakis, George**
  72100 Ierapetra, Crete (GR)

• **Batalla Mongay, Jordi**
  03-838 Warsaw (PL)
• **Pallis, Evangelos**
  71500 Heraklion, Crete (GR)

(72) Inventors:
• **Kryftis, Yiannos**
  1700 Nicosia (CY)
• **Mavromoustakis, Constandinos**
  1700 Nicosia (CY)
• **Mastorakis, George**
  72100 Ierapetra, Crete (GR)
• **Batalla Mongay, Jordi**
  03-838 Warsaw (PL)
• **Pallis, Evangelos**
  71500 Heraklion, Crete (GR)

(54) **A SYSTEM AND METHOD FOR FORECASTING THE DEMAND FOR MULTIMEDIA CONTENT AND FOR SELECTING THE OPTIMAL DELIVERY METHODS (FORECASTING MIDDLEWARE SCHEDULER - FMS)**

(57)    A system and methods for the optimal distribution of streaming data among cloud-based providers, Content Delivery Networks and P2P Networks is proposed to aid the provision of entertainment services over the Internet. The Forecasting Middleware Scheduler (FMS) collects monitoring data about the usage of the multimedia content and uses it as input to a Resource Prediction Engine that predicts the future usage demand.

For that purpose the RPE utilizes: (1) a number of standard time series models in order to fit the data to the most suitable model and predict future values of the demand and (2) an innovative epidemic spread model and an innovative method to predict a possible upcoming epidemic spread of content. An algorithm is used within the FMS for the combination of the prediction methods in order to suggest the optimal delivery methods to be used.

EP 3 301 945 A1

## Description

## Technical Field

The invention is related to multimedia content delivery over the Internet. More particularly, the invention relates to systems, methods and models for the prediction of the upcoming demand for video content and to systems and methods to combine multiple methods for the effective delivery of content based on the current and predicted future demand.

## Background Art

The evolution of multimedia-related technologies over the Internet, is applying more pressure for further research and development on the field of multimedia content distribution. Some popular methods for delivering multimedia content to users over the Internet are: (1) directly through a connection with a Web Server (2) through peer to peer (P2P) networks of users and (3) over some specialized Content Delivery Networks (CDNs) that are globally distributed networks of proxy servers and can be deployed in multiple data centres.

Several existing research attempts elaborate on the combination of different delivery methods, in order to achieve better Quality of Experience (QoE) for the users.

In patent US WO2008057653 A (AKAMAI TECHNOLOGIES, INC) 15.05.2008 they used a CDN system that can be assisted by peers in a P2P system.

In research paper XU/DONGYAN, Kulkarni/Sunil Suresh, et al. Analysis of a CDN-P2P hybrid architecture for cost-effective streaming media distribution. Multimedia Systems. 2006, vol.11, no.4, p.383-399. a CDN-P2P hybrid architecture was proposed for cost-effective streaming media distribution that combines the advantages of using CDN for providing high QoE with the low cost of using P2P-based stream. In a similar approach in YIN/HAO, Liu/Xuening, et al. Design and deployment of a hybrid CDN-P2P system for live video streaming: Experiences with LiveSky. Proceedings of the ACM international conference on Multimedia. 2009, p.25-34. the design and deployment of a hybrid CDN-P2P system for live video streaming was presented, demonstrating the improvement in startup delay time and in stability. In CIULLO\DELIA, Martina\Valentina, et al. Peer-assisted VoD systems: An efficient modeling framework. IEEE Transactions on Parallel and Distributed Systems. 2014, vol.25, no.7, p.1852-1863. proposed a peer-assisted video distribution in order to reduce the server workload and to introduce scalability to the system. They suggest a stochastic fluid framework that allows the estimation of the needed bandwidth for the satisfaction of the user requests based on predefined scenarios.

The aforementioned research approaches focus on how to benefit from the combination of the different delivery methods but they do not take consideration of handling each resource separately. In the research paper KRYFTIS/YIANNOS, Mastorakis/George, et al. Resource Usage Prediction Models for Optimal Multimedia Content Provision. IEEE Systems Journal. 2015, vol.PP, no.99, p.1-12. they proposed handling each resource (i.e., streaming channel) separately based on the prediction of the future demand for each resource, as well as the predicted network metrics. The early prediction before the actual need provides to the system the ability to enforce management actions to maintain a high QoE for the users.

This patent extends this approach by suggesting different more effective architecture, methods and models to achieve the optimal content delivery. It manages to utilize a combination of time-series and epidemic models for the prediction of the demand, while effectively decides on the optimal content delivery methods.

A Resource Prediction Engine (RPE) constitutes an important part of a multimedia content delivery system, in order to provide the desired QoE to the end users. Its role is to provide the ability to efficiently predict the needed bandwidth capacity and the upcoming network fluctuations. In NIU/DI, Liu/Zimu, et al. Demand forecast and performance prediction in peer-assisted on-demand streaming systems. INFOCOM, 2011 Proceedings IEEE. 2011, p.421 - 425. they present some time-series analysis techniques to predict the server bandwidth demand and the peer upload for content delivery in peer-assisted VoD services. The analysis includes the prediction of future population for each video channel, by analyzing and fitting to existing models, past data about the population of video channels. The near future demands expectations are estimated based on the history of demands as monitored by the cloud monitoring services. This provides the opportunity to reserve the minimum bandwidth needed for satisfying the demand in the desired quality.

In a similar manner, in the patent a RPE utilizes a combination of statistical models for the prediction of future needs. The innovation originates from the novel model that is used and the method for performing predictions over the model and from the selection of the appropriate model, out from a pool of statistical models (ARMA, ARIMA, theta method, cubic splines BOX/E.P.GEORGE, JENKINS/M.GWILYM. Time Series Analysis: Forecasting and Control. 4th edition. John Wiley & Sons, Inc, 2013. ISBN 0470272848.).

For a RPE able to forecast future demands, the recent advances in connected media technologies and social networks had been taken into account. Social networks play a significant role in content delivery, by providing ways of interactions among users that can lead to a lightning spread of content.

This patent includes a novel compartment epidemic model with five states, customized to describe the population in each state during an epidemic spread of content through the proposed overall system. Additionally, our suggestion for the prediction is based on fitting historical data into the proposed model. Epidemic model spreading in scale-free networks has been intensively studied and a review can be found in KEELING/J.MATT, Eames\T.D.Ken. Networks and Epidemic Models. Journal of the Royal Society Interface. 2005, vol.2, no.4.

The model that is used in the patent extends the basic diseases models, by presenting a novel model that can be used to accurately describe the multimedia content delivery (i.e., VoD delivery) and so it can help forecasting epidemic spread of multimedia content.

**Summary of invention**

Forecasting Middleware Scheduler (FMS) is a software component that acts as a middleware system between providers of content and their clients in order to perform all the necessary activities to set up the best allocation of resources, in terms of efficiency, including dynamic and continuous processing of the multimedia streaming sessions and including predictions for potential upcoming multimedia streaming sessions. It coordinates the optimal exploitation of the available resources. According the input from the Monitoring Services about the available resources, the FMS calculates and provides instructions to a Media Streaming Service for enhancing users' QoE-based delivery requests. In addition, the FMS manages all the deployed delivery solutions, optimizes the allocation of resources and takes the decision for the streaming of media.

**Brief description of drawings**

Figure 0001 presents the internal architecture of the FMS component.
Figure 0002 presents the five states of the SAIRD epidemic spread model and the transitions between them.
Figure 0003 presents the flowchart diagram for the selection of the content delivery methods.

Description of embodiments

The synergy among Cloud-based streaming approaches, traditional CDNs, and P2P networks is a very promising solution that utilizes resource elasticity offered by the cloud computing, the stable edge transport capability of CDNs and the scalable, last-mile transport capability of P2P approaches, while avoiding excessive use (geographic inter-domain span) of P2P delivery, which is ISP-unfriendly.

The system is scalable and predictive based on a network architecture that efficiently exploits CDN assets and Conventional Cloud properties, by customizing their usage via dynamic resource reservation schemes and proactive bandwidth auto-scaling mechanisms, for the entertainment services delivery in respect to the user QoE.

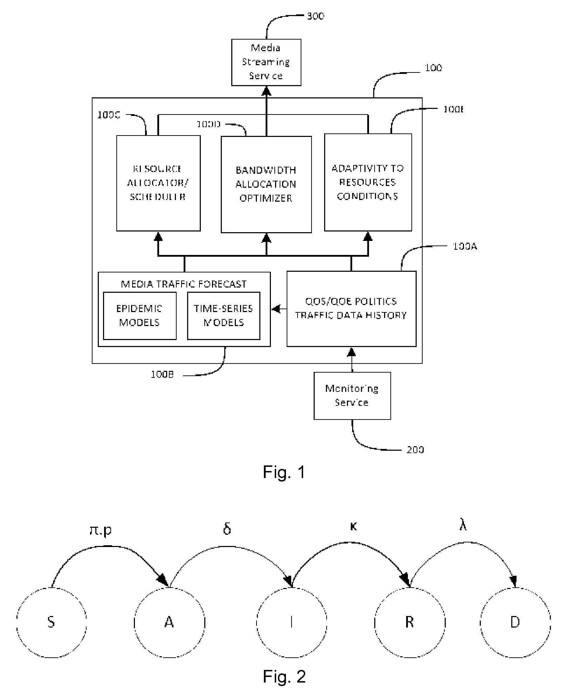

The internal architecture of the system is depicted in Figure 0001. The QoS/QoE Politics Traffic Data History component (100A) gathers the monitoring data that comes from the Monitoring Service - MS (200), using it as input to the Media Traffic Forecast (100B) and generating the prediction for the traffic in the network.

The Media Traffic Forecast (100B) utilizes the epidemic model for the prediction of upcoming epidemic spread and the time series models for the prediction of future values of the demand.

The outcome of the forecasts is used as an input to the Resource Allocator/Scheduler (100C) that uses algorithms to combine the forecast methods, allowing it to decide on the optimal delivery methods.

The results are feeding the Media Streaming Service - MSS (300) component with recommendations, on which server should stream the requested media, while at the same time the Bandwidth Allocation Optimizer (100D) calculates the optimal bandwidth allocation for the P2P delivery between the home equipment devices. It is an online system, which takes into consideration the network metrics that come from the MS, delivering that information directly to the devices.

The Adaptivity to Resources Conditions (100E) is responsible for performing adaptation to the new conditions of the environment by enforcing recalculation of the metrics.

The 100A includes a Resource Prediction Engine (RPE). The RPE can be implemented in a high level programming language (i.e. Java) and can use libraries for statistical computing (i.e. R-System). The RPE is able to fit the historical data to time series models in order to predict future values for metrics based on their past data.

Additionally 100A includes an epidemic model that manages to predict upcoming epidemic spread of content.

The patented SAIRD epidemic model extends the basic disease models, by presenting a novel model that can be used to accurately describe the multimedia content delivery (i.e., VoD delivery) and so it can help forecasting epidemic spread of multimedia content. The majority of disease models are based on a splitting in compartments of the individuals in a population based on their disease status.

The SAIRD epidemic model has five states as shown in Figure 0002. The model divides the population into several compartments based on the percentage of the population in each state.

The Susceptible (S) group includes subscribers that can download the Video, the Active (A) includes the users that are currently downloading the Video, the Infected (I) contains the users that downloaded the Video and they can spread it through social networks (if they liked the video), the Recovered (R) contains the Users that passed from the Infected phase but they do not spread the Video any more (after some period of time) while the Deleted (D) group includes users that removed the Video after sometime or the Video was automatically removed from the cache after some period of time.

The differential equations that describe the system are the following:

$$\frac{dS}{dt} = -\beta.I.S$$

$$\frac{dA}{dt} = \beta.I.S - \delta.A$$

$$\frac{dI}{dt} = \delta.A - \kappa.I$$

$$\frac{dR}{dt} = \kappa.I - \lambda.R$$

$$\frac{dD}{dt} = \lambda.R$$

$$S + A + I + R + D = 1$$

The rate of transmission of infection is expressed with the following equation:

$$\pi(t) = \beta.S.I$$

where $\beta$ is the social network contact rate.

For the analysis of the model and the prediction of future values of the Active and Infected population it is important to be able to calculate the contact rate $\beta$. This parameter of the model takes into account the probability of getting the disease in a contact between a susceptible and an infectious subject.

The system is able to collect data related to the social networks of the clients.

We use the data collected from the social networks of the users to make estimation of the infection rate $\beta$. The formula we use is the following:

$$\beta = \frac{\sum_i A_i Y_i}{\sum_i A_i X_i} * \frac{N_S}{N} * \frac{1}{I(t_0)S(t_0)}$$

where,

Ai=0 if subscriber i is not infected
Ai=1 if subscriber i is infected
Xi is the number of friends of subscriber i in state S at time to
Yi is the number of friends of subscriber i in state S at time $t_1$
Ns is the total number of friends of the Infected population is state S at time $t_1$
N is the total number of the Subscribers.
$I(t_0)$ is the Infected Population at to
$S(t_0)$ is the Sustainable Population at to

This formula provides to the system the ability to make an early prediction for the $\beta$ based on the number of friends of the infected population and the newly active population that was caused in a time frame.

The other rates of the model can be expressed as follows:

$$\delta(t) = \frac{1}{DurationOfVideo}$$

$$\kappa(t) = \frac{1}{DurationOfSpread}$$

$$\lambda(t) = \frac{1}{DurationOfCache}$$

Regarding the DurationOfVideo it is a parameter that represents the duration of the video which is known for each video and so it is easy to be set-up in the model. The DurationOfCache is a pre-set parameter on the home equipment of the users and so it can be considered as known. For the DurationOfSpread we used a constant duration based on some statistics. In a similar approach to what we did for $\beta$ we could use some social networks criteria for the estimation.

The model is used for the prediction of upcoming epidemic spread of content in order to provide the chance to perform management actions in order to ensure high QoE for the clients.

Some other standard time series models (ARMA, ARIMA, theta method, cubic splines) are also used for the prediction of the upcoming demand based on past values of the demand. This is performed first by selecting the most appropriate time series model that fits the data and then by using it for the prediction of the future values.

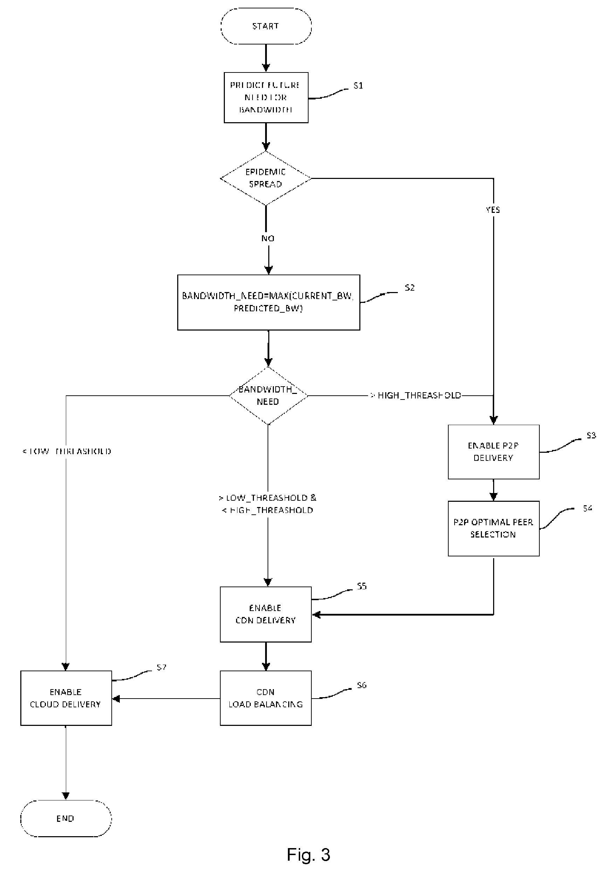

The algorithm for the selection of a combination of content delivery methods is shown in the flowchart diagram of <u>Figure 0003</u>. The flowchart represents the steps followed for the decision of the delivery methods to be utilized for satisfying each delivery of multimedia content. The decision is based on current and predicted future values.

At stage S1 we have the prediction of the future need for bandwidth.

If the prediction does not indicate an upcoming epidemic spread, the flow goes to S2 in order to calculate the bandwidth need for serving the distribution of the specific content. This field gets the maximum value for the needed bandwidth between the current and the predicted value.

If the value is lower than the low_threshold the flow goes to S7 to enable only the Cloud Delivery.

If the value is higher than low_threshold and lower than high_threashold the flow goes through S6 to enable the CDN Delivery, through S7 to set the CDN load balance and then through S7 to enable also the Cloud Delivery.

In case the value of bandwidth_need is higher than the high_threashold the flow goes to S3 to enable the P2P delivery, to S4 to perform the optimal selection of peers for the P2P delivery. Then it continues with the S5, S6 and S7.

In case of epidemic spread the flow again goes through S3, S4, S5, S6 and S7 in order to enable all the delivery methods.

Industrial applicability

The patent is applicable in the industry of multimedia distribution over the internet.

**References**

- **US** WO2008057653A (AKAMAI TECHNOLOGIES, INC) 15.05.2008
- XU/DONGYAN, Kulkarni/Sunil Suresh, et al. Analysis of a CDN-P2P hybrid architecture for cost-effective streaming media distribution. Multimedia Systems. 2006, vol.11, no.4, p.383-399.
- YIN/HAO, Liu/Xuening, et al. Design and deployment of a hybrid CDN-P2P system for live video streaming: Experiences with LiveSky. Proceedings of the ACM international conference on Multimedia. 2009, p.25-34.
- CIULLO\DELIA, Martina\Valentina, et al. Peer-assisted VoD systems: An efficient modeling framework. IEEE Transactions on Parallel and Distributed Systems. 2014, vol.25, no.7, p.1852-1863.
- KRYFTIS/YIANNOS, Mastorakis/George, et al. Resource Usage Prediction Models for Optimal Multimedia Content Provision. IEEE Systems Journal. 2015, vol.PP, no.99, p.1-12.
- NIU/DI, Liu/Zimu, et al. Demand forecast and performance prediction in peer-assisted on-demand streaming systems. INFOCOM, 2011 Proceedings IEEE. 2011, p.421 - 425.
- BOX/E.P.GEORGE, JENKINS/M.GWILYM. Time Series Analysis: Forecasting and Control. 4th edition. John Wiley, 2013. ISBN 0470272848.
- KEELING/J.MATT, Eames\T.D.Ken. Networks and Epidemic Models. Journal of the Royal Society Interface. 2005, vol.2, no.4.

**Claims**

1. The FMS method and system for selecting the optimal combination of content delivery methods to be used for delivering multimedia content to the users.

2. The SAIRD epidemic model that defines five possible states for the subscribers of the service and the transitions rates between these states. The model is able to describe the behavior of a population of users regarding the demand of multimedia content delivery.

3. The method for predicting the upcoming demand based on the SAIRD epidemic model.

4. The method to combine the prediction methods to select the optimal delivery methods.

Fig. 1

Fig. 2

Fig. 3

Europäisches
Patentamt

European
Patent Office

Office européen
des brevets

# EUROPEAN SEARCH REPORT

Application Number

EP 16 19 1152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRYFTIS YIANNOS ET AL: "Epidemic models using Resource Prediction mechanism for optimal provision of multimedia services", 2015 IEEE 20TH INTERNATIONAL WORKSHOP ON COMPUTER AIDED MODELLING AND DESIGN OF COMMUNICATION LINKS AND NETWORKS (CAMAD), IEEE, 7 September 2015 (2015-09-07), pages 91-96, XP032856728, DOI: 10.1109/CAMAD.2015.7390487 [retrieved on 2016-01-25] * the whole document * | 1-4 | INV. H04N21/63 H04B17/00 H04H60/80 H04L29/06 H04N21/647 G06N7/00 |
| X | US 2015/288573 A1 (BAUGHMAN AARON K [US] ET AL) 8 October 2015 (2015-10-08) * the whole document * | 1-4 | |

TECHNICAL FIELDS
SEARCHED (IPC)

H04N
H04B
H04H
H04L
G06N

The present search report has been drawn up for all claims

| Place of search | Date of completion of the search | Examiner |
|---|---|---|
| Berlin | 22 May 2017 | Bertrand, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 1152

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2017

| Patent document cited in search report | Publication date | Patent family member(s) | Publication date |
|---|---|---|---|
| US 2015288573 A1 | 08-10-2015 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008057653 A

**Non-patent literature cited in the description**

- **XU/DONGYAN ; KULKARNI/SUNIL SURESH et al.** Analysis of a CDN-P2P hybrid architecture for cost-effective streaming media distribution. *Multimedia Systems,* 2006, vol. 11 (4), 383-399
- **YIN/HAO ; LIU/XUENING et al.** Design and deployment of a hybrid CDN-P2P system for live video streaming: Experiences with LiveSky. *Proceedings of the ACM international conference on Multimedia.,* 2009, 25-34
- **CIULLO\DELIA ; MARTINA\VALENTINA et al.** Peer-assisted VoD systems: An efficient modeling framework. *IEEE Transactions on Parallel and Distributed Systems,* 2014, vol. 25 (7), 1852-1863
- **KRYFTIS/YIANNOS ; MASTORAKIS/GEORGE et al.** Resource Usage Prediction Models for Optimal Multimedia Content Provision. *IEEE Systems Journal,* 2015, vol. PP (99), 1-12

- **NIU/DI ; LIU/ZIMU et al.** Demand forecast and performance prediction in peer-assisted on-demand streaming systems. *INFOCOM, 2011 Proceedings IEEE,* 2011, 421-425
- **BOX/E.P.GEORGE ; JENKINS/M.GWILYM.** Time Series Analysis: Forecasting and Control. John Wiley & Sons, Inc, 2013
- **KEELING/J.MATT ; EAMES\T.D.KEN.** Networks and Epidemic Models. *Journal of the Royal Society Interface,* 2005, vol. 2 (4
- **YIN/HAO ; LIU/XUENING et al.** Design and deployment of a hybrid CDN-P2P system for live video streaming: Experiences with LiveSky. *Proceedings of the ACM international conference on Multimedia,* 2009, 25-34
- **BOX/E.P.GEORGE ; JENKINS/M.GWILYM.** Time Series Analysis: Forecasting and Control. John Wiley, 2013